# EUROPEAN PATENT APPLICATION

(11) **EP 4 254 106 A1**
(43) Date of publication of application: **04.10.2023**
(21) Application number: 23165388.2
(22) Date of filing: 30.03.2023
(51) Int. Cl.: G05B 19/418

(54) **DEVICE, SYSTEM, METHOD, AND PROGRAM FOR COLLECTING DATA**

(30) Priority: 01.04.2022 JP 2022061815
(71) Applicant: OMRON Corporation, Kyoto 600-8530 (JP)
(72) Inventor: SAKASHITA, Shota, Kyoto-shi, 600-8530 (JP)
(74) Representative: Mewburn Ellis LLP

(57) **Abstract**

A data collection device (10A) includes a data collection unit (63) that collects data of a data item related to production work from a production line (3) that produces a target through a plurality of processes (3A, 3B, 3C), and an acquisition unit that acquires an identifier (43, 44) of the target produced in the production line. For each process, the data collection device links the identifier of the target with data collected from the process during a period in which a production operation is performed on the target in the process, and generates visualization data visualizing the data of each process linked with the identifier.

## Description

### CROSS REFERENCE TO RELATED APPLICATIONS

This nonprovisional application is based on Japanese Patent Application No. 2022-061815 filed on April 1, 2022, with the Japan Patent Office, the entire contents of which are hereby incorporated by reference.

### BACKGROUND OF THE INVENTION

### Field of the Invention

The present disclosure relates to a technique for collecting data of factory automation (FA), particularly to a technique for collecting data of a production line producing a product through a plurality of processes.

### Description of the Background Art

A technique for monitoring the production line including the plurality of processes has been proposed. For example, Japanese Patent Laying-Open No. 2021-86193 discloses an information collection system of an industrial instrument. The information collection system includes: a collection unit that collects a plurality of pieces of processing information related to each of a plurality of processing processes executed by a plurality of processing instruments from each of the plurality of processing instruments before corresponding one product is manufactured from at least one workpiece; and an association unit that associates the plurality of pieces of processing information collected by the collection unit with each other by adding a cooperation identifier that can cooperate among a plurality of processing processes related to one product.

### SUMMARY OF THE INVENTION

At a production site, there is a user need to visually grasp information regarding production collected from the production line. Japanese Patent Laying-Open No. 2021-86193 does not disclose a technique for visualizing the collected information.

An object of the present disclosure is to provide a configuration capable of generating visualized data visualizing data collected from the production line.

A device according to an example of the present disclosure that collects data of a production line through which a target is produced through a plurality of processes, the device includes: a collection unit configured to collect data of a data item related to production work from each process; an acquisition unit configured to acquire an identifier of the target produced in the production line; a linking unit configured to link the identifier of the target acquired by the acquisition unit with the data collected by the collection unit from the process in a period in which the production work is performed on the target in the process for the each process; and a generation unit configured to generate visualization data visualizing the data of the each process linked with the identifier by the linking unit.

According to this disclosure, for each process, the identifier of the target is linked with the data related to the production work collected in the period in which the production work is performed on the target in the process, and the visualization data of the data linked with the identifier is acquired.

In the above disclosure, the collection unit periodically collects the data from each process, and the linking unit links, for each process, the identifier of the target with the partial time series data corresponding to the period described above in the time series data configured to be periodically collected from the process.

According to this disclosure, for each process, the partial time series data collected in the period in which the production work is performed on the target is acquired for each target to which the production work is performed in the process, and the identifier of the target can be linked with the partial time series data.

In the above disclosure, the each process is configured to allow the target to be input one by one to the process, the production line is configured to allow the target to be input from one process to a next process in predetermined order, and the visualization data includes, for the each process, characteristic visualization data that visualizes and represents a characteristic of a change in a value of the partial time series data for each target input to the process.

According to this disclosure, for each process, the characteristic visualization data that visualizes and represents the characteristic of the change in the value of the partial time series data for each object input to the process can be provided.

In the above disclosure, the characteristic visualization data includes, for the each process, temporal characteristic visualization data representing a characteristic indicating a temporal change in a value of the partial time series data for each target input to the process by visualizing the characteristic with a common time axis.

According to this disclosure, for each process, the temporal characteristic visualization data representing the characteristic indicating the temporal change of the value of the partial time series data for each object input to the process by visualizing the characteristic with the common time axis can be provided.

In the above disclosure, the characteristic visualization data includes GUI data including an object that visualizes the characteristic for each of the target for the each process.

According to this disclosure, the characteristic visualization data is configured to include, for each process, the object that graphically represents the characteristic for each target.

In the above disclosure, the GUI data includes an object that visualizes the identifier of the target linked with the partial time series data of the object on condition that a user operation on the object is received.

According to this disclosure, the object that graphically visualizes the identifier of the target linked with the partial time series data of the object according to the user operation can be provided.

In the above disclosure, for each process, the object visualizing the characteristic of one of the targets is configured to visualize the characteristic in a manner different from the object visualizing the characteristic of another of the targets.

According to this disclosure, for each process, the graphically-visualized object can visualize the characteristics of one target in a manner that can be distinguished from the characteristics of other targets.

In the above disclosure, for each process, a UI unit configured to set the data item collected by the collection unit in the data collection device for the each process is further included.

According to the present disclosure, an environment in which a user can set the data item to be collected for each process is provided.

In the above disclosure, the identifier of the target object is configured by an identifier in which at least a part of the identifier is common in the plurality of processes.

According to this disclosure, at least a part of the identifier of the target can be represented by an identifier common to the plurality of processes.

In the above disclosure, the production line is configured to produce the target in a lot unit, and the common identifier includes an identifier of the lot to which the target belongs.

According to this disclosure, at least a part of the identifier of the object can be represented by the identifier of the lot to which the object belongs.

In the above disclosure, the data collection device is comprised in a control system including a control device that controls the production line.

According to the present disclosure, the data collection device can be provided in the system including the control device that controls the production line.

A method according to an example of the present disclosure is a method for collecting data of a production line through which a target is produced through a plurality of processes, the data collection method including: collecting data of a data item related to production work from each of the plurality of processes; acquiring an identifier of the target produced in the production line; linking, for the each process, an identifier of the target acquired in the acquiring with data collected from the process during a period in which the production work is performed on the target in the process in the process; and generating visualization data visualizing data of the each process linked with the identifier.

According to this disclosure, when the method is performed, for each process, the identifier of the target is linked with the data related to the production work collected in the period in which the production work is performed on the target in the process, and the visualization data of the data linked with the identifier is acquired.

In an example of the present disclosure, a program having instructions that, when executed by one or more processors, cause the one or more processors to perform the method described above is provided.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a view schematically illustrating an outline of a PLC 100 according to an embodiment.
Fig. 2 is a schematic diagram illustrating an example of an overall configuration of a network system of the embodiment.
Fig. 3 is a block diagram illustrating a hardware configuration example of the PLC 100 of the embodiment.
Fig. 4 is a view schematically illustrating a hardware configuration of a support device 500 of the embodiment.
Fig. 5 is a view illustrating a configuration example of a screen of the embodiment.
Fig. 6 is a view schematically illustrating a module configuration of the PLC 100 of the embodiment.
Fig. 7 is a flowchart illustrating processing of a monitor method of the embodiment.
Fig. 8 is a view schematically illustrating a process constituting a production line.
Fig. 9 is a view illustrating a table configuration of management of partial time series data of the embodiment.
Fig. 10 is a view illustrating the table configuration of the management of the partial time series data of the embodiment.
Fig. 11 is a view illustrating another display example of the screen of the embodiment.
Fig. 12 is a view illustrating an example of a timing chart of the embodiment.
Fig. 13 is a view schematically illustrating a process constituting the production line.
Fig. 14 is a view illustrating another example of the timing chart of the embodiment.
Fig. 15 is a view schematically illustrating a process constituting the production line.
Fig. 16 is a view illustrating an example of an information setting screen of the embodiment.

### DESCRIPTION OF THE PREFERRED EMBODIMENT

With reference to the drawings, an embodiment of the present invention will be described in detail. The same or equivalent part in the drawings is denoted by the same reference numeral, and the description will not be repeated.

### <A. Application example>

In the embodiment, a programmable logic controller (PLC) will be described as a typical example of a "control system", but the technical idea disclosed in the present specification can be applied to any control system without being limited to the name of the PLC. In the embodiment, a "target" that becomes a production target is referred to as a product, but the term "product" is used to mean not only a finished product but also a part or an intermediate product constituting the finished product.

In the embodiment, a production line includes a plurality of processes. For example, the product to be input into the production line is automatically conveyed between instruments constituting a plurality of processes arranged in the order of work processes by an appropriate conveyance device such as a belt conveyor. The product flows through the plurality of processes in a predetermined order by the conveyance device, namely, the production operation is performed on the product in each process. The product flowing through each process is input from one process to the next process.

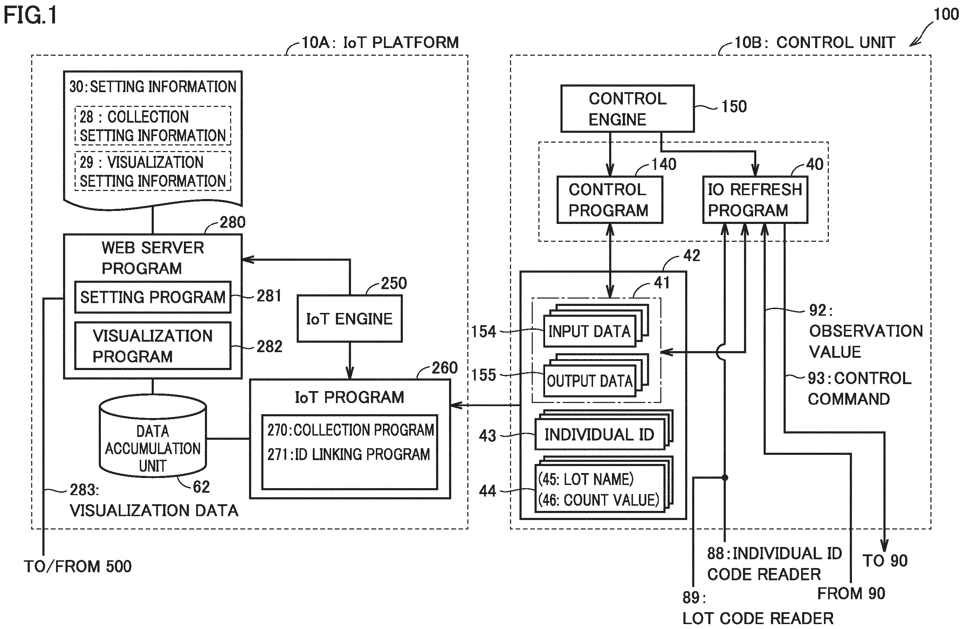

Fig. 1 is a view schematically illustrating an outline of a PLC 100 according to an embodiment. In the embodiment, PLC 100 is applied to a product production line including a plurality of processes. Each process includes an instrument related to at least one production operation. Such the instrument includes a field device 90, an individual ID code reader 88 that detects an ID (identifier) of a product, and a lot code reader 89. Field device 90 includes an actuator that exerts some physical action on a field such as the production line according to a control command 93, and an input and output device such as a sensor that exchanges information with the field. The state of field device 90 is observed by such the input and output device, and an observation value 92 is output.

PLC 100 includes a control unit 10B that repeatedly executes processing for exchanging data with these industrial devices (hereinafter, also referred to as IO refresh) and processing for control arithmetic operation for each predetermined control cycle. Control unit 10B can constitute a control device that controls a production line.

Referring to Fig. 1, PLC 100 includes control unit 10B and an IoT platform 10A. Control unit 10B configures a platform that executes a program related to real-time control of an industrial instrument under a real-time operating system (OS), and IoT platform 10A mainly configures a platform executing a program of IoT processing under a general-purpose OS.

Control unit 10B includes a control engine 150, a user program executed by control engine 150, and a data area 42. The user program includes a control program 140 for the control arithmetic operation including, for example, a ladder program and the like, and an IO refresh program 40 for IO refresh, which are executed at every predetermined control cycle. Data area 42 includes an area 41 in which input data 154 and output data 155 are stored, and an area in which an individual ID 43 representing the ID of the product flowing through the process and lot data 44 are stored.

In the IO refresh, the data is collected from field device 90 in each control cycle, observation value 92 that is the collected data, individual ID 43 collected from individual ID code reader 88, and lot data 44 collected from lot code reader 89 are stored in data area 42, and control command 93 calculated by the control arithmetic operation in the control cycle is read from the collection area and output to field device 90.

Control program 140 is a so-called variable program. More specifically, the data of observation value 92 referred to by control program 140 at the time of execution, the internal calculation data, and the like can be utilized using an input variable corresponding to input data 154, an output variable corresponding to output data 155, a temporary variable, and the like for each data. Observation value 92 from field device 90 is stored as input data 154 by IO refresh, and control program 140 sets control command 93 by the control arithmetic operation to output data 155.

As described above, in each control cycle, field device 90 is driven in accordance with control command 93, observation value 92 is output from field device 90 based on the drive result, and PLC 100 executes control program 140 based on observation value 92 to perform the control arithmetic operation and outputs control command 93 based on the result of the control arithmetic operation. PLC 100 repeatedly performs processing (hereinafter, also referred to as IO refresh) including the input of observation value 92 and the output of control command 93 and the control arithmetic processing in the control cycle, so that the production work in each process is continuously performed while controlling field device 90 of each process in synchronization with each other. As a configuration for implementing such the synchronization control, for example, PLC 100 may adopt a configuration in which a user program including control program 140 and IO refresh program 40 is included for each process, and the user program of each process is executed in parallel at a common control cycle.

Code reader 88 is provided in each process, for example, optically reads the identifier of the product flowing through the process, and outputs individual ID 43 indicating the read identifier. In the production line, the identifier of the product is not limited to individual ID 43, but may be acquired by lot data 44. More specifically, lot code reader 89 is provided at a head process of the production line. When a sensor (for example, a proximity sensor) detects that the product is input to the production line, lot code reader 89 optically reads a lot name 45 from the product. In addition, for each process, when it is detected that the product is introduced, control unit 10B sets an operating flag described later from "OFF" to "ON" in response to the detection, and every time the operating flag is set, a counter circuit described later performs count up for the process and outputs a count value 46. In this manner, count value 46 of each process indicates the order of flowing through the process for each product input to the process. In the embodiment, since the order of the product flowing through each process is configured to be matched between processes, the product input into a certain process in a k-th (k = 1, 2, 3, ...) order is matched with the product input into the next process in the k-th order. Therefore, lot data 44 common between processes can be assigned as the identifier to the same product in the same lot.

As described above, in the embodiment, the configuration in which individual ID code reader 88 is used or the configuration in which lot code reader 89 is used can be applied to the mechanism for acquiring the identifier of the product. Hereinafter, in the description common to the product identifiers indicated by individual ID 43 and lot data 44, collectively referred to as a "product ID".

IoT platform 10A may constitute a "data collection device" that mainly collects information from the production line. IoT platform 10A includes an IoT engine 250, an IoT program 260 and a web server program 280 which are executed by IoT engine 250, and also includes setting information 30 and a data accumulation unit 62. Using these elements, IoT platform 10A provides an environment for generating visualization data 283 that visualizes and represents data of at least one data item associated with the product ID from the data stored in data area 42 of control unit 10B.

For each process, setting information 30 includes collection setting information 28 indicating the setting of the data item to be collected in order to generate visualization data 283, and visualization setting information 29 indicating the setting in order to generate visualization data 283 from the data collected according to collection setting information 28. In the embodiment, the data item set in collection setting information 28 is set by, for example, a variable name of data, but the method for setting the data item is not limited to the method in which the variable name is used.

IoT program 260 includes a collection program 270 that collects (searches) the data of the data item set for each process from data area 42 according to collection setting information 28 and stores the data in data accumulation unit 62, and an ID linking program 271.

Data area 42 has a buffer area in which the data can be stored (held) for a time of a predetermined length. When collection program 270 is executed, PLC 100 searches the data of the data item set for each process from the buffer area of data area 42, and stores the searched data in data accumulation unit 62. Thus, in data accumulation unit 62, for each process, the data of the data item related to the production work set for the process is read from the buffer area and stored in data accumulation unit 62 in time series. Hereinafter, such the data stored in time series is also referred to as time series data.

When ID linking program 271 is executed, PLC 100 performs linking processing. In the linking processing, PLC 100 reads the updated product ID from data area 42 every time the product ID (individual ID 43 or lot data 44) corresponding to each process in data area 42 is updated. In the linking process, PLC 100 specifies a part of the time series data corresponding to the time of the read (that is, update) timing of the product ID in the time series data of the process of data accumulation unit 62, and links (associates) the read product ID with the specified part of the time series data. The part of the time series data specified in this manner is hereinafter also referred to as "partial time series data".

Web server program 280 includes a setting program 281 that generates setting information 30 and a visualization program 282 that generates visualization data 283 according to visualization setting information 29. Visualization setting information 29 includes, for each process, the data item and the product ID of the data to be visualized. When visualization program 282 is executed, PLC 100 performs visualization processing. In visualization processing, PLC 100 searches the time series data corresponding to the data item of each process from data accumulation unit 62 based on the data item set for each process indicated by visualization setting information 29. For each process, PLC 100 also extracts the partial time series data for each product ID from the searched time series data of the process, and generates visualization data 283 that is visible in associating these partial time series data with each other from the extracted partial time series data.

When web server program 280 is executed, PLC 100 operates as a web server under IoT platform 10A. The web server transfers visualization data 283 including the web data to a support device 500. The web browser included in support device 500 displays a web screen based on the web data of visualization data 283 received from the web server. The web data includes graphical user interface (GUI) data, and the web screen includes a GUI screen. The web data can be generated using a hypertext markup language (HTML), for example, in order to visualize and represent various objects including the web screen and the image in the screen.

In this way, when the screen is displayed based on generated visualization data 283, for each process of the production line, the time series data of the data item collected in the process is visualized while the partial time series data corresponding to each product flowing through the process is associated with each other.

In Fig. 1, the data collection device configured under IoT platform 10A and control unit 10B may be integrally configured, or both may be configured by individual devices capable of exchanging the data through a wired or wireless network.

Hereinafter, a more detailed configuration and processing of PLC 100 of the embodiment will be described as a more specific application example of the present disclosure.

### <B. System configuration>

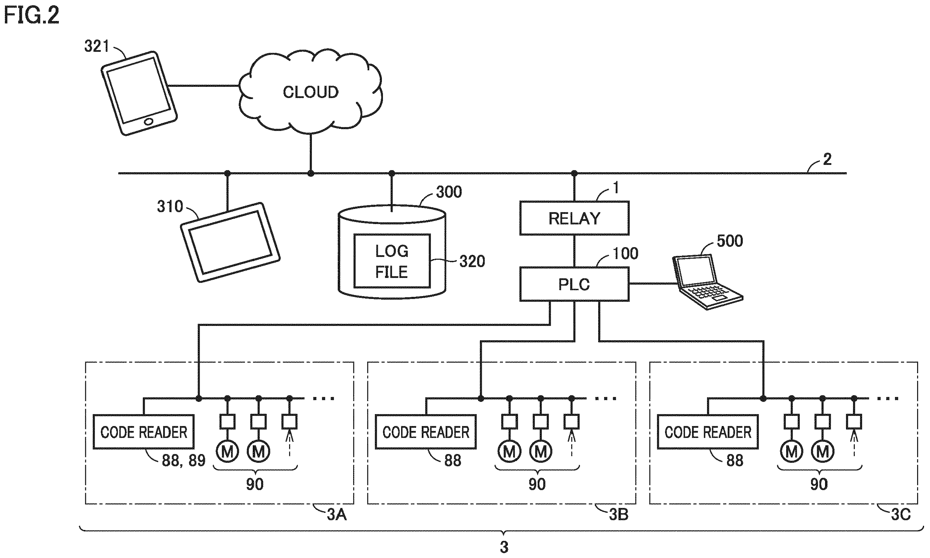

An example of a network system including a production line 3 included in FA of the embodiment will be described. Fig. 2 is a schematic diagram illustrating an example of an overall configuration of the network system of the embodiment.

In Fig. 2, production line 3 applied to the FA includes different processes 3A, 3B and 3C. For example, but not by way of limitation, process 3A illustrates the process of screwing the product, process 3B illustrates the process of soldering the screwed product, and process 3C illustrates the process of painting the soldered product. Such the process corresponds to a classification (type) of production work when a plurality of types of work are performed on the product by the field device. The types and the number of processes included in production line 3 are not limited thereto, but can be changed according to the type of product to be produced or a specification of the product.

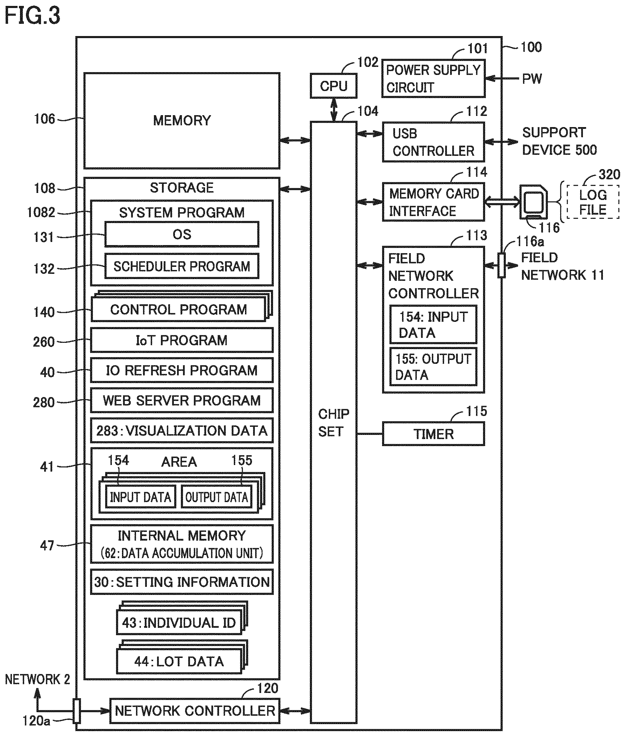

In each of processes 3A, 3B, and 3C, one or a plurality of field devices 90 and individual ID code reader 88 are provided in order to perform the production work of the process, and lot code reader 89 is provided in process 3A that is the head process. These instruments are connected to field network 11. In addition to being connected to PLC 100 through field network 11 as illustrated in Fig. 3, sometimes these instruments are directly connected to PLC 100 through an input and output unit (not illustrated) related to PLC 100.

For example, the data exchanged between PLC 100 and the instrument through field network 11 is updated in a very short period of several 100 µsec order to several 10 msec order. The exchanged data update processing is implemented by the IO refresh.

PLC 100 is connected to a network 2 through a relay 1. A server device 300 and a human machine interface (HMI) device 310 are connected to network 2, and an information terminal 321 is connected to network 2 through a cloud. Server device 300 receives the data transferred from PLC 100, for example, the data stored in data accumulation unit 62, and stores the data as a log file 320. The storage destination of log file 320 is not limited to the device on network 2 (for example, server device 300), but may include the device on the cloud.

A protocol and a framework according to a difference in required characteristics are adopted for network 2 and field network 11. EtherNet/IP (registered trademark), which is an industrial open network in which a control protocol is mounted on general-purpose Ethernet (registered trademark), may be used as the protocols of network 2. EtherCAT (registered trademark), which is an example of a machine control network, may be adopted as the protocol of field network 11. The protocols of these networks may be the same or different.

Support device 500 can be connected to PLC 100. Support device 500 provides support tool that supports the user to operate production line 3. The support tool includes a preparation setting tool such as an execution environment of control program 140 or a communication environment with PLC 100. The support tool further includes a support tool that supports the setting of setting information 30. For example, such the support tool is provided to the user by a user interface (UI).

In production line 3, support device 500 may be connected to network 2, built in PLC 100, or provided as a portable terminal. In addition, an HMI device 310 or an information terminal 321 can be provided as a desktop terminal or a portable terminal.

### (C. Configuration of PLC 100)

Fig. 3 is a block diagram illustrating a hardware configuration example of PLC 100 of the embodiment. With reference to Fig. 3, PLC 100 includes a power supply circuit 101 that supplies power PW to each unit of PLC 100, a central processing unit (CPU) 102, a chip set 104, a memory 106 mainly including a volatile storage medium, a storage 108 mainly including a nonvolatile storage medium, a universal serial bus (USB) controller 112, a field network controller 113 to which field network 11 is connected, a memory card interface 114, a timer 115, and a network controller 120 as main components.

CPU 102 reads the user program including control program 140 stored in storage 108 or an SD card 116 and deploys the user program in memory 106. CPU 102 interprets and executes the deployed program to control each portion of PLC 100 and implements the control arithmetic processing for controlling the control target such as field device 90. Furthermore, CPU 102 reads IoT program 260, web server program 280, and control program 140 that are stored in storage 108 or SD card 116, and deploys IoT program 260, web server program 280, and control program 140 in memory 106. CPU 102 interprets and executes the developed program to control each portion, and implements the data collection and the linking processing from each process, acquisition processing of setting information 30, and the visualization processing.

Memory 106 is configured of a dynamic random access memory (DRAM), a static random access memory (SRAM), or the like. For example, storage 108 includes a non-volatile storage device such as a hard disc drive (HDD), a solid state drive (SSD), or a flash memory, but a part of storage 108 may include a volatile storage.

Chip set 104 mediates the exchange of the data between CPU 102 and each component, thereby implementing the processing of PLC 100 as a whole.

Storage 108 stores control program 140 designed according to the control target and IO refresh program 40 in addition to a system program 1082 including a scheduler program 132 and an operating system (OS) 131 that implement a basic functions of PLC 100. Storage 108 further stores IoT program 260 and web server program 280. Furthermore, storage 108 includes an area in which visualization data 283 is stored, area 41 in which the data collected regarding control is stored, an internal memory 47 constituting an area of data accumulation unit 62 corresponding to the storage, and the area in which setting information 30, individual ID 43, and lot data 44 are stored.

In the embodiment, for example, a storage format of the time series data of each process in data accumulation unit 62 can include a text data file such as a comma separated values (CSV) file. Such the file can be uniquely identified by attaching a file name and a generation date and time as a header.

USB controller 112 is in charge of the data exchange with any information processing device through the USB connection. For example, the arbitrary information processing device includes support device 500.

Field network controller 113 includes a connector 116a that connects field network 11 to which field device 90 and the like belong, and controls data exchange between the PLC 100 and other devices including field device 90 via field network 11. Field network controller 113 includes an internal buffer that stores observation value 92 received from field network 11 and control command 93 output from PLC 100 to field network 11 as input data 154 and output data 155.

Memory card interface 114 is configured such that SD card 116 is detachable. Under the control of CPU 102, memory card interface 114 writes the information in SD card 116 and reads the information from SD card 116. The information read from or written to SD card 116 includes an application program including control program 140 and IoT program 260, data such as various settings, and a log file 320.

Timer 115 includes a clock circuit or a counter circuit that measures time, but is not limited to such the circuit, and may include a software module executed by CPU 102.

Network controller 120 includes a connector 120a that connects PLC 100 to network 2, and controls the data exchange between another device and PLC 100 through network 2.

CPU 102 includes one or a plurality of processors. The one or the plurality of processors repeatedly executes control program 140 and refresh program 40 at a predetermined cycle (for example, a control cycle), thereby performing the above-described control arithmetic processing and IO refresh to periodically control the devices connected to field network 11. Furthermore, one or the plurality of processors of CPU 102 executes IoT program 260 and web server program 280.

Although the configuration example in which required functions are provided by CPU 102 executing the program is described in Fig. 3, some or all of these provided functions may be implemented using a dedicated hardware circuit (for example, an application specific integrated circuit (ASIC) or a field-programmable gate array (FPGA)). The main part of PLC 100 may be implemented using hardware (for example, an industrial personal computer based on a general-purpose personal computer) according to a general-purpose architecture. In this case, processing may be executed in parallel by applying a multi-core technology. The plurality of OSs having different uses may be executed in parallel using a virtualization technology, and the required application may be executed on each OS.

### <D. Configuration of support device 500>

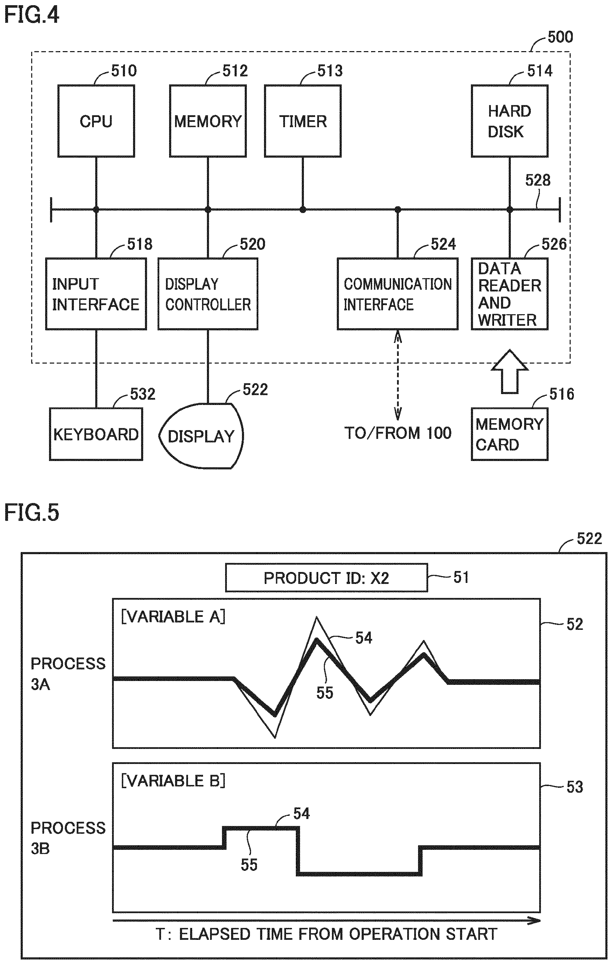

Fig. 4 is a view schematically illustrating a hardware configuration of support device 500 of the embodiment. With reference to Fig. 4, support device 500 includes a CPU 510, a memory 512 including a volatile storage device such as a dynamic random access memory (DRAM), a timer 513, a hard disk 514 configured of the nonvolatile storage device such as an HDD, an input interface 518, a display controller 520, a communication interface 524, and a data reader and writer 526. These units are data-communicably connected to each other through a bus 528.

Input interface 518 mediates the data transmission between CPU 510 and input devices such as a keyboard 532, a mouse (not illustrated), and a touch panel (not illustrated). Display controller 520 is connected to a display 522 and displays a processing result in CPU 510 and the like. Communication interface 524 communicates with PLC 100 through a USB. Data reader and writer 526 mediates the data transmission between CPU 510 and a memory card 516 that is an external storage medium.

Detachable attached storage medium such as SD card 116 of PLC 100 and memory card 516 in Fig. 4 includes the volatile storage medium or the nonvolatile storage medium, and for example, include a general-purpose semiconductor storage device such as a compact flash (CF) or an SD (Secure Digital), a magnetic storage medium such as a flexible disk, or an optical storage medium such as a compact disk read only memory (CD-ROM).

### <E. Display example based on visualized data>

Fig. 5 is a view illustrating a configuration example of a screen of the embodiment. When web server program 280 of PLC 100 is activated, PLC 100 provides service as a web server for support device 500. The provided service includes provision of visualization data 283 including the time series data linked with the product ID for each process.

In Fig. 5, for example, a window 51 and windows 52 and 53 that visualize and display the time series data are displayed on display 522. In the embodiment, the term "window" is used to distinguish the display area of the information on the screen, but the technical idea of the display disclosed in the present specification is applicable to any screen without being limited to the name of the window.

In Fig. 5, the screen based on visualization data 283 is displayed based on the product ID and processes 3A and 3B set as a visualization target by visualization setting information 29. The screen displays that the data items set as the collection target by IoT program 260 based on collection setting information 28 are as "variable A" and "variable B" for process 3A and process 3B.

"X2" is displayed as the product ID in window 51 of the screen, and the names of the data items (variable names) to be collected for process 3A and process 3B and the characteristics indicating the temporal change of the plurality of pieces of partial time series data of the time series data for the data items are displayed by graphs 54, 55 in windows 52 and 53. A waveform of a change in the data value of the partial time series data is indicated by the graph. In each of windows 52, 53, the value of the data is taken on a vertical axis of the graph, and an elapsed time T that is a common time axis for the partial time series data of each product is taken on a horizontal axis. Elapsed time T corresponds to a period from the start to the end of the operation of the production work for the product in the process.

Because the production work performed in each process is different, the length of the period described above is different between processes. Visualization data 283 includes data that visualizes the partial time series data of each process by expanding or shortening the partial time series data in a time axis direction such that the period of each process is matched with elapsed time T having a predetermined length.

The graph of the partial time series data corresponding to the data item (variable A) of each product is displayed in window 52 of process 3A in Fig. 5, and the graph of the partial time series data corresponding to the data item (variable B) of each product is displayed in window 52 of process 3B.

When product ID "X2" is set in visualization setting information 29 and visualization program 282 is executed, PLC 100 generates visualization data 283 such that the partial time series data of the product having product ID "X2" is output in a mode different from the partial time series data of other products according to visualization setting information 29. For example, such the different mode includes changing the display color of the graph to red. The change in the display mode is not limited to the change based on the color.

For example, when an abnormality is detected in the product having product ID "X2" in the inspection process, the user sets product ID" X2" in visualization setting information 29, so that PLC 100 generates visualization data 283 that enables the screen display in Fig. 5.

The user can grasp the characteristic of the temporal change of the value of the data indicated by the partial time series data of product ID "X2" or the difference between the characteristic of the temporal change of the red graph and the characteristic of the temporal change indicated by the graph of another product (for example, graph 55) from the red graphs (for example, graph 54) displayed in windows 52, 53 in Fig. 5. The user can determine whether the data of the data item related to the production work of the product with product ID "X2" deviates from the data of the data item for another product, or the degree of deviation from the grasped information.

According to the screen in Fig. 5, the user can determine that the degree of the deviation is large in process 3A. Based on the determination, when "variable A" indicates observation value 92, the user may estimate that the behavior of field device 90 at which observation value 92 of the data item "variable A" is observed may be the cause of the anomaly.

The screen in Fig. 5 may be provided as the GUI. The screen in Fig. 5 includes the object of the graph (image) that visualizes the characteristic indicating the temporal change in the partial time series data for each product. As described above, the GUI data can include the data that presents the object having the characteristic of one product (product ID "X2") and the object visualized in a manner different from that of the object having the characteristic of another product ID on the same screen.

Web server program 280 may generate GUI data of visualization data 283 such that the command is executed in response to reception of a click operation or the like on the object on the screen in Fig. 5.

For example, the object command includes a command for displaying the object representing the visualized product ID associated with the partial time series data of the object in window 51 on a condition that the user operation on the object of the waveform image is received. Such the command is not limited to the command for displaying the product ID. For example, the command may be a command for executing processing such as displaying the statistic of the values of the partial time series data of the object, switching the type of the graph (switching to waveform graph, displaying a histogram together with a waveform graph, or the like), or changing elapsed time T.

The display destination of the screen based on visualization data 283 is not limited to support device 500, but may be HMI device 310, information terminal 321, or PLC 100 when PLC 100 includes the display device.

### <F. Module configuration of PLC 100>

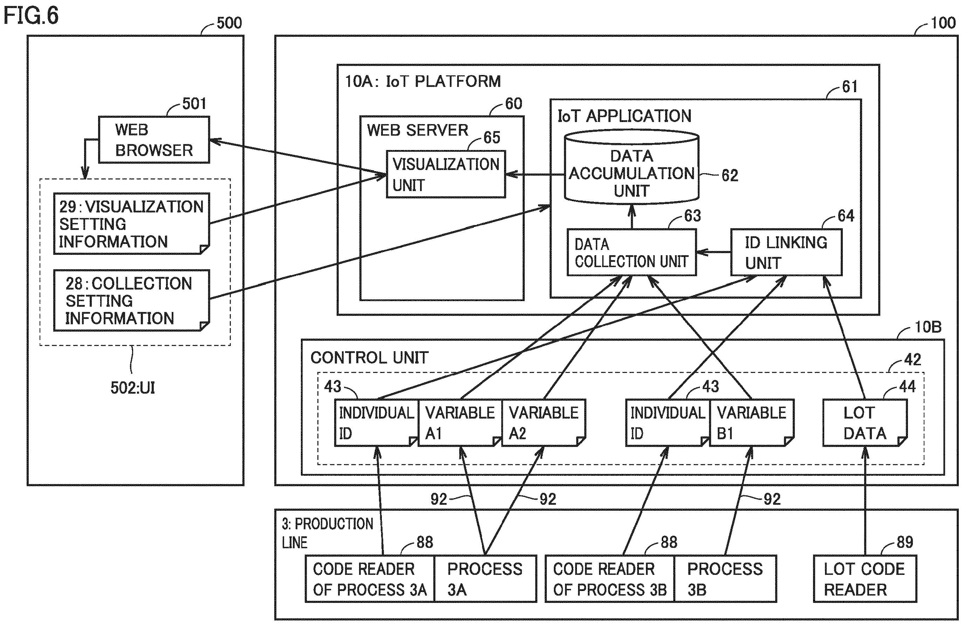

Fig. 6 is a view schematically illustrating a module configuration of PLC 100 of the embodiment. In Fig. 6, the module configuration of PLC 100 is illustrated in association with the module of support device 500. Support device 500 includes a web browser 501 and a UI 502 activated by web browser 501. UI 502 corresponds to a tool that supports the setting of setting information 30 such as visualization setting information 29 and collection setting information 28. Web browser 501 causes display 522 to display the screen based on the web data including visualization data 283 from PLC 100.

PLC 100 includes a module configured in IoT platform 10A and a module configured in control unit 10B. PLC 100 includes a web server 60 implemented by executing web server program 280 under IoT platform 10A and IoT application 61 implemented by executing IoT program 260. IoT application 61 includes a data collection unit 63 implemented by executing collection program 270 and an ID linking unit 64 implemented by executing ID linking program 271.

Fig. 6 illustrates a mode in which visualization setting information 29 and collection setting information 28 set by the user by operating UI 502 are held in support device 500 and utilized (referred to) from the module of PLC 100 as appropriate. However, the utilization modes of visualization setting information 29 and collection setting information 28 are not limited thereto. For example, visualization setting information 29 and collection setting information 28 set through UI 502 may be transferred to PLC 100 and stored in storage 108, and the module of PLC 100 may utilize (refer to) visualization setting information 29 and collection setting information 28 stored in storage 108.

Control unit 10B collects, by the IO refresh, the data of the product ID from production line 3 and the data of the variable indicating observation value 92, and stores the collected data in data area 42. The product ID data thus collected includes individual ID 43 and lot data 44. In data area 42 of Fig. 6, the data item (variables A1, A2) of process 3A and the data item (variable B1) of process 3B that are set by collection setting information 28 are illustrated for the sake of explanation.

Data collection unit 63 can search for data of the data item (variable) of each process set as the collection target from data area 42 based on collection setting information 28, and store the time series data of the searched data item in data accumulation unit 62. ID linking unit 64 performs the linking processing described above. Thus, the partial time series data corresponding to each product is specified in the time series data of each process.

Visualization unit 65 of web server 60 generates visualization data 283 by performing the visualization processing according to the setting of visualization setting information 29 based on the time series data of each process of data accumulation unit 62. Web browser 501 acquires visualization data 283 from web server 60, and causes display 522 to display the screen based on visualization data 283.

### <G. Flowchart>

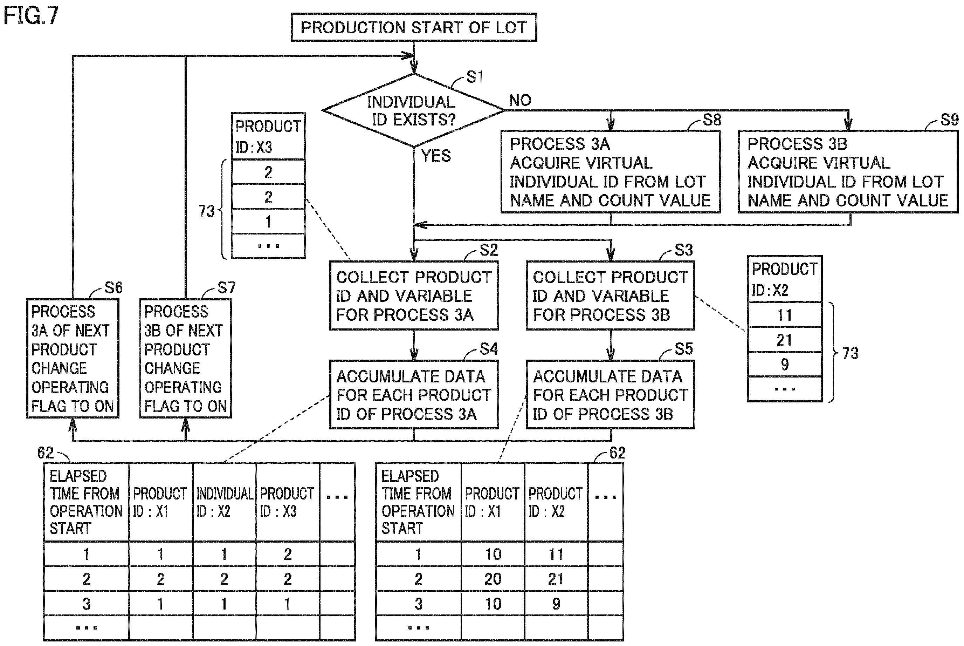

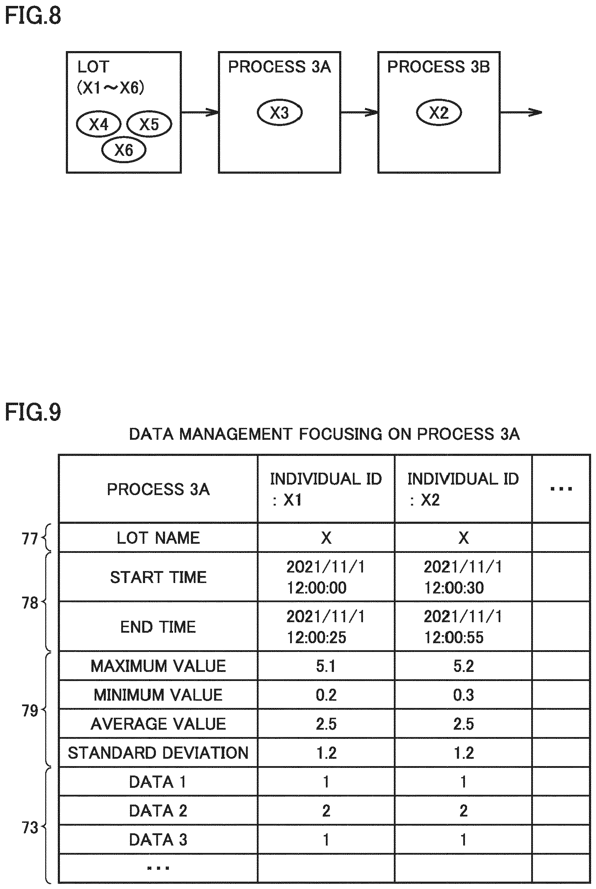

Fig. 7 is a flowchart illustrating processing of a monitor method of the embodiment. The flowchart in Fig. 7 is implemented by CPU 102 executing each program as illustrated in Fig. 1. Fig. 8 is a view schematically illustrating a process constituting a production line. In Fig. 8, for example, the production line includes process 3A in which a lot of products are input and next process 3B. When the lot includes products having product IDs "X1" to "X6", the products are introduced in the order of "X1", "X2", "X3", "X4", "X5", "X6". Fig. 8 illustrates a state in which the input product of "X1" is output from the production line through processes 3A and 3B.

CPU 102 monitors the in-operating flag (not illustrated) corresponding to each process indicated by input data 154 during the processing in Fig. 7. The operating flag is set to change to "ON" when the input of the product to the process is detected, and to change to "OFF" when the flow of the product to the next process is detected. That is, for the process, each period from when the operating flag changes to "ON" to when the operating flag changes to "OFF" corresponds to the period during which one product is flowing through the process. For each process, CPU 102 starts the data collection for the process when the operating flag changes from "OFF" to "ON", and thereafter, ends the data collection when the operating flag changes from "ON" to "OFF". As described above, CPU 102 performs the data collection in the period in which the operating flag indicates "ON" for each process.

Fig. 8 illustrates the state in which the product having product ID "X2" passed through process 3A flows to process 3B, and the next product having product ID "X3" is input into process 3A. For example, the processing in Fig. 7 illustrates the processing in this state. Fig. 7 illustrates the processing for two processes 3A and 3B, but the process to be processed is not limited thereto.

Referring to Fig. 7, CPU 102 determines from which individual ID 43 or the virtual individual ID (lot data 44) the product ID is to be acquired based on the collection setting information 28 as ID linking unit 64 (step S1). Here, collection setting information 28 includes from which individual ID 43 or lot data 44 the setting of the product ID is to be acquired.

When it is determined that the product ID is acquired from lot data 44 (NO in step S1), CPU 102 acquires the virtual individual ID from lot data 44 for the product flowing through each process (steps S8, S9). Thereafter, the processing transfers to step S2.

On the other hand, when it is determined that the product ID is acquired from individual ID 43 (YES in step S1), CPU 102 collects the data based on collection setting information 28 in the period in which the operating flag is "ON", and performs the linking processing of the product ID (the individual ID or the virtual individual ID) in the collected time series data (steps S2, S3). Thus, partial time series data 73 of the product ID is acquired. Fig. 7 illustrates acquired partial time series data 73 in association with the linking processing of steps S2, S3. Partial time series data 73 associated with product ID "X3" is acquired for process 3A, and partial time series data 73 associated with product ID "X2" is acquired for process 3B.

CPU 102 accumulates partial time series data 73 acquired in steps S2, S3 in data accumulation unit 62 for each process (steps S4, S5). Fig. 7 schematically illustrates partial time series data 73 corresponding to each product accumulated (stored) in data accumulation unit 62 in association with steps S4, S5. In data accumulation unit 62, in process 3A, the linking processing is performed on each of product IDs "X1", "X2", and "X3", so that the state in which three pieces of partial time series data 73 are stored is indicated. In addition, in process 3B subsequent to process 3A, the state in which two pieces of partial time series data 73 are acquired by performing the linking processing on each of product IDs "X1" and "X2" is illustrated.

CPU 102 monitors the operating flag corresponding to each process, and when it is determined that the operating flag is changed to "ON" (steps S6, S7), the process proceeds to step S1, and the subsequent processing is performed in the same manner as described above. Thus, in each process, the linking processing of the partial time series data is performed on the product input next.

Such the monitoring of the operating flag, the data collection, and the linking processing are repeatedly performed on the product input to each process. Through such the repetition processing, for each process, the linking-processed partial time series data of each product constituting the lot is acquired and stored in data accumulation unit 62.

In Fig. 7, it is described that the linking processing (steps S2, S4) in process 3A and the linking processing (steps S3, S5) in process 3B are executed simultaneously, but in the actual processing, because the length of the required time for the production operation may be different between the processes, the execution time of the linking processing may be different. Similarly, the timing of the determination of the operating flag of process 3A (step S6) and the timing of the determination of the operating flag of process 3B (step S7) are also illustrated to be the same in Fig. 7, but in actual processing, the timings may be different from each other because the length of the required time of the production work may be different between processes.

### <H. Modification of data collection>

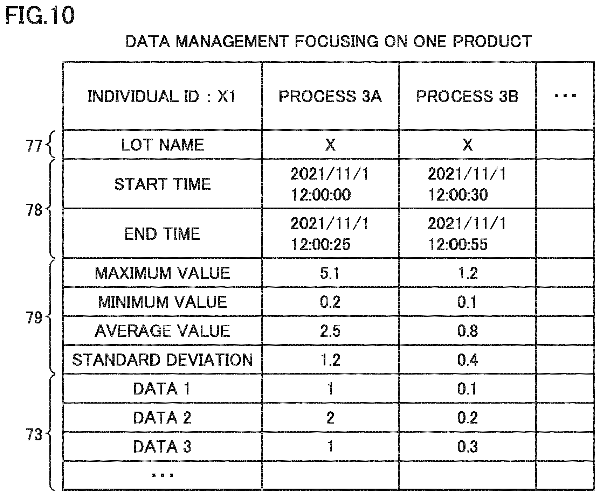

Figs. 9 and 10 are views illustrating a table configuration of the management of the partial time series data of the embodiment. In the embodiment, data collection unit 63 may manage partial time series data 73 focusing on each process in data accumulation unit 62 as illustrated in Fig. 9, or may manage partial time series data 73 focusing on each product as illustrated in Fig. 10.

In the management configuration of Fig. 9, for example, for process 3A, data collection unit 63 manages partial time series data 73 in, for example, one column by associating a lot name 77, a collection start and end time 78, and a statistic 79 for each product ID. For other processes, the partial time series data is managed similarly to Fig. 9. Collection start and end time 78 indicates the time from the collection start to the collection end of the data item in the process. The time corresponds to the time from when the product is input to the process until the product flows to the next process. Statistic 79 includes a statistic (a maximum value, a minimum value, an average value, standard deviation, and the like) calculated by data collection unit 63 based on the value of the item data indicated by partial time series data 73.

In the management configuration of Fig. 10, for example, for the product with product ID "X1", data collection unit 63 manages partial time series data 73 for each process by associating lot name 77, collection start/end time 78, and statistic 79, for example, in one column.

In the configuration of Fig. 9, data is held as one table for each process (variable). In the case where the user desires to store the data for traceability, the data can be held in the form of one CSV file for each product ID in Fig. 10. In the embodiment, one of Fig. 9 and Fig. 10 may be set as the mode of the data accumulation (collection) in collection setting information 28. Data collection unit 63 collects the partial time series data in the mode of Fig. 9 or Fig. 10 according to the setting of collection setting information 28.

In the processing of Fig. 7, the partial time series data is acquired and stored in parallel with the flow of each product of the lot in production line 3, but the partial time series data may be acquired as follows. That is, while the time series data of each process is constantly collected, only the index (the time when it is determined that the operating flag is ON, the product ID, and the like) is accumulated as the process data. After all the products of the lot flow through all the processes, the linking processing of acquiring the partial time series data of each product from the time series data of each process may be performed based on the index, and acquired partial time series data 73 may be stored in data accumulation unit 62 in the mode of Fig. 9 or Fig. 10.

### <1. Another display example based on visualized data>

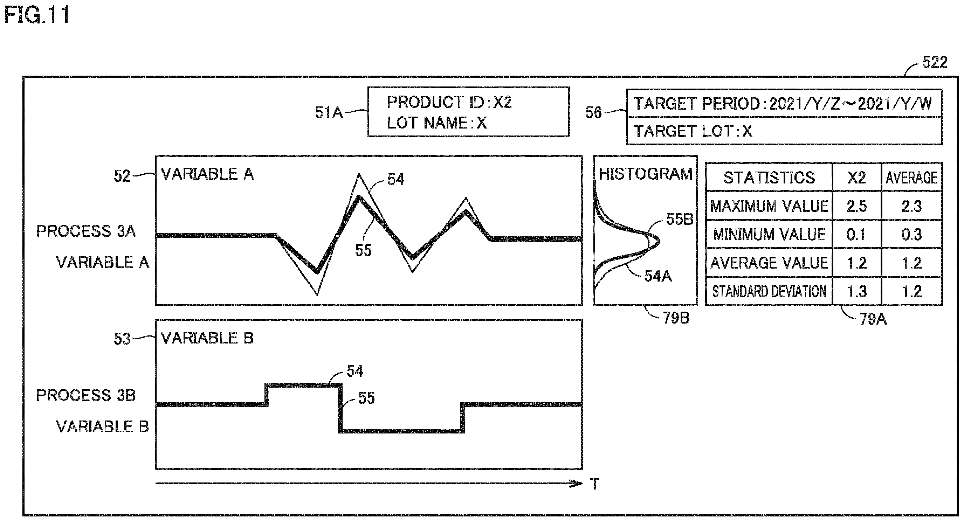

Fig. 11 is a view illustrating another display example of the screen of the embodiment. The screen in Fig. 11 illustrates a modification of the screen in Fig. 5. In Fig. 11, in addition to windows 52, 53, a window 51A displaying the product ID of the product and the lot name to which the product belongs, a window 56, and windows 79A, 79B are included. Window 56 indicates the period from the start to the end of the production of the product belonging to the lot in production line 3. Window 79A indicates the average value of statistics 79 (the maximum value, the minimum value, the average value, and the standard deviation) calculated by data collection unit 63 for the partial time series data of product ID "X2" that passes through process 3A and the partial time series data of other products that passes through process 3A in the period indicated in window 56. As described above, in window 79A, for example, the statistics of the product having product ID "X2" and the partial time series data and the product having the product ID other than "X2" and the partial time series data are quantitatively indicated. Window 56 can constitute the UI for the user to designate the period and the lot name of the data to be visualized. In addition, the period from the production start to the production end of the selected product ID may be displayed in window 51A.

In window 79B, a histogram is displayed in association with the waveform of the partial time series data of process 3A. In this histogram, the horizontal axis indicates a plurality of ranks of values indicated by the waveform of window 52, and the vertical axis indicates a frequency of the value belonging to each rank. Similarly to the graph of the waveform of window 52, the visualization data constituting the histogram is also the data representing, for each process, the characteristic of the change in the value of the partial time series data for each product input to the process in a visualized manner. In window 79B, a graph 54A of product ID "X2" set (selected) by visualization setting information 29 is displayed in red as in the graph of window 52, and a graph 55B of other product IDs is displayed in black as in the graph of window 52.

In the screen of Fig. 11, when the user performs a click operation on the graphs of windows 52, 53 or the histogram of window 79B, the object indicating the corresponding product ID is displayed in association with the clicked graph or histogram. For example, when the red graph or histogram is operated, the object representing product ID "X2" is displayed proximate to the operated graph or histogram.

Furthermore, the following settings may be made in visualization setting information 29. For example, in window 52 or 53, the graph of the more recently acquired partial time series data in a target period indicated by window 56 may be set to be displayed in a darker color, and the graph of the more past partial time series data may be set to be displayed in a lighter color.

In addition, a plurality of waveforms may be simultaneously selected in windows 52, 53 by the user operation. In Fig. 11, the waveform is displayed for one lot designated in window 56, but the waveform for each lot may be displayed for a plurality of lots. In addition, the period for collecting the partial time series data for each product to be collected (displayed) may be changed by collection setting information 28, and the lot to be collected for the partial time series data may be made selectable.

### <J. Timing chart>

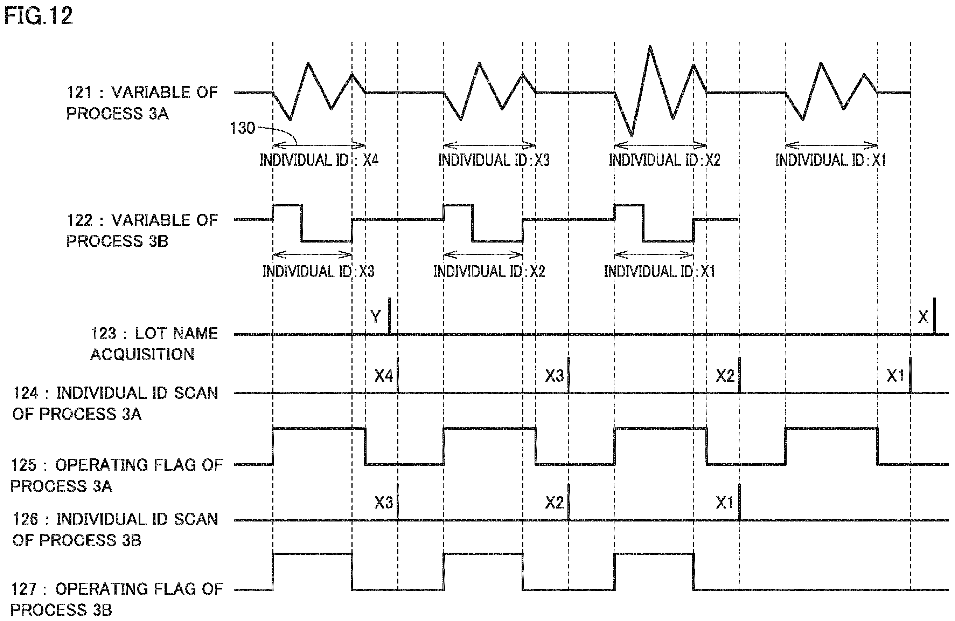

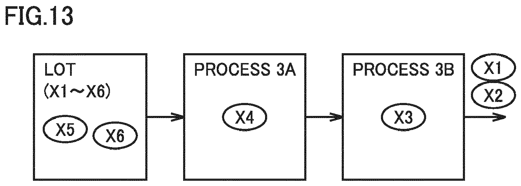

Fig. 12 is a view illustrating an example of a timing chart of the embodiment. Fig. 13 is a view schematically illustrating a process constituting the production line. In Fig. 13, for example, the production line includes process 3A in which the lot of products are input and next process 3B. When the lot includes products having product IDs "X1" to "X6", the products are introduced in the order of "X1", "X2", "X3" ... "X6". Fig. 13 illustrates the state in which the product having product ID "X3 " passing through process 3A flows to process 3B and the next product having product ID "X4" is introduced to process 3A. Fig. 12 illustrates the timing chart in the state of the process in Fig. 13. In Figs. 12 and 13, two processes 3A and 3B are exemplified, but the target process is not limited thereto.

In Fig. 12, in process 3A, for each lot, when the product of the lot is put into process 3A, lot name acquisition 123 is performed and lot name 45 is set. In addition, the data collection is performed for a variable 121 in a period 130 in which an operating flag 125 is "ON", and individual ID 43 is linked with respect to the collected partial time series data as the product ID. Similarly, in process 3B, the data collection is performed on a variable 122 during the period in which an operating flag 127 is "ON", and individual ID 43 is linked with the collected partial time series data. In addition, in processes 3A, 3B, scans 124,126 of individual ID 43 are performed at the timing when the product input to the process is detected. In Fig. 12, lot name 45 of the product input to production line 3 is detected (acquired) every lot switching. In production line 3, in order to manage the products in a unit in which the plurality of products are collected, for each unit, the products belonging to the unit are classified and managed by assigning common lot name 45 (for example, the lot number).

### (J1. Another example of timing chart)

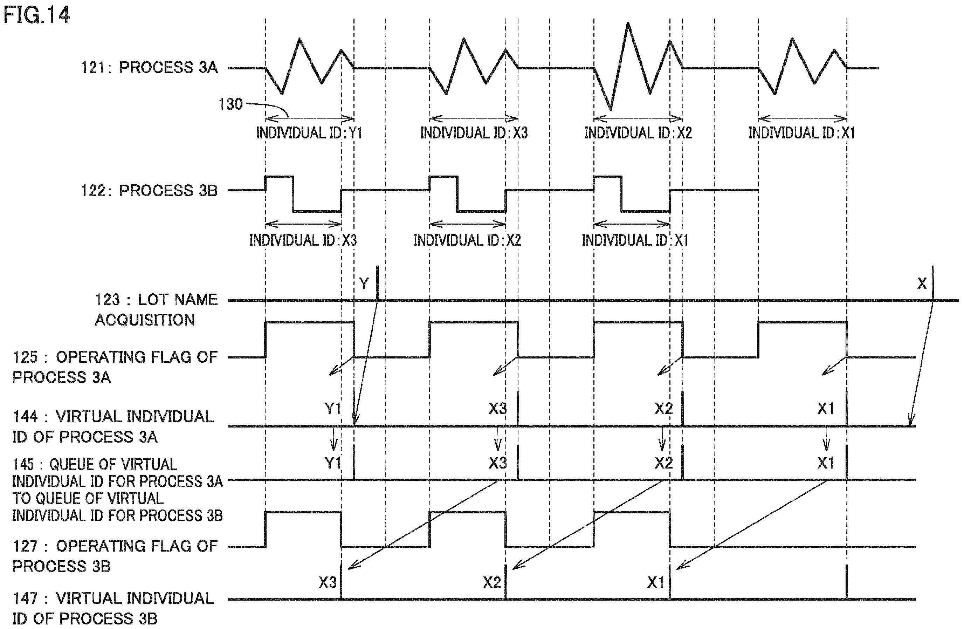

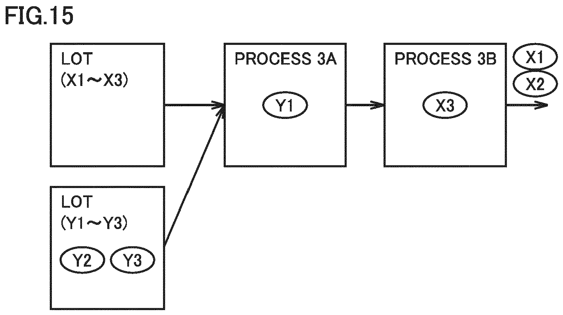

In Fig. 12, individual ID 43 is acquired as the product ID, but a virtual individual ID may be acquired. Fig. 14 is a view illustrating another example of the timing chart of the embodiment. Fig. 15 is a view schematically illustrating a process constituting the production line. Fig. 15 illustrates the case where the product of a different lot "Y" is input to production line 3 during the production of the product of one lot "X". Fig. 15 illustrates the state in which the product having product ID "X3" of lot "X" flows to process 3B and the product having a product ID "Y1" of lot "Y" is introduced to process 3A. Fig. 14 illustrates the timing chart in the state of the process in Fig. 15. In Figs. 14 and 15, two processes 3A and 3B are exemplified, but the process to be processed is not limited thereto.

In Fig. 14, for each lot, when the product of the lot is input to process 3A, lot name acquisition 123 is performed and lot name 45 is set. After the input of the lot is started to the production line to acquire lot name 45, count value 46 is set to lot data 44 every time the product of the lot is input to the production line, and the virtual individual ID is indicated by a combination of lot name 45 and count value 46 of lot data 44. CPU 102 stores the virtual individual ID acquired in a certain process in, for example, a queue configured in data area 42. When the operating flag of the next process changes from "OFF" to "ON", CPU 102 reads the virtual individual ID from the queue, and performs the linking processing for linking the read virtual individual ID with the partial time series data acquired in subsequent period 130. In Fig. 14, virtual individual ID 144 in the previous process (process 3A) is stored in a queue 145, and when operating flag 127 of next process 3B changes to "ON", virtual individual ID 144 read from queue 145 is utilized as virtual individual ID 147 of next process 3B. As described above, when production line 3 is configured to produce the products in lot units, virtual individual ID 147 can be configured to include the lot name that is at least a part is the identifier common among the plurality of processes.

In the embodiment, operating flag 125,127 are set by the execution of the command such as a function block included in control program 140. Such the instruction may include an arithmetic command or a timer command that set the operating flag.

As described above, the method for acquiring the virtual individual ID in each process is not limited to the method for utilizing lot data 44 unique to each process as illustrated in Fig. 1, but may be a method for sharing the virtual individual ID stored in queue 145 between processes as illustrated in Fig. 14.

### <K. Example of information setting screen>

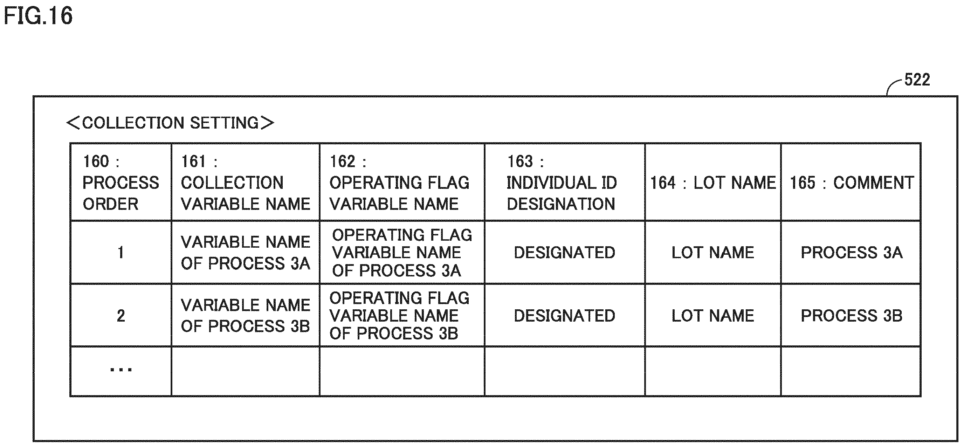

Fig. 16 is a view illustrating an example of an information setting screen of the embodiment. In Fig. 16, for example, UI 502 displays the screen on display 522, accepts the user operation on the screen, and acquires collection setting information 28 according to the accepted user operation.

Fig. 16 illustrates the screen on which collection setting information 28 is set in a table format. The items set in the table include, for each process, a process order 160 indicating the order of the process in which the product flows through production line 3, a variable name 161 indicating the data item to be collected in the process, a variable name 162 in which the operating flag corresponding to the process is set, an individual ID designation 163, a lot name 164, and a comment 165. Individual ID designation 163 designates use of individual ID 43 as the product ID. Lot name 164 indicates a variable name in which lot name 45 is set. Comment 165 indicates a user comment such as description of data collected for the process.

Process order 160 is utilized to exchange the virtual individual ID between processes through the queue. Comment 165 may be displayed with the graph of the partial time series data in Fig. 5 or Fig. 11. One or a plurality of variable names can be set as collection variable name 161. Such the variable name includes a variable name of observation value 92 or a variable name of control command 93. For example, the variable name of observation value 92 can include three types of variable names of the torque, the speed, and the Z-axis position that are included in observation value 92 of field device 90 for screw tightening. Based on collection setting information 28 in which the three types of variable names are set as described above, data collection unit 63 can simultaneously collect the data of three types of the data items from the screw tightening process. In addition, control command 93 indicated by the variable name of the collection target may include a command to field device 90 such as a screw-tightening servomotor, for example, a command indicating a numerical value such as the position, the speed, the acceleration, a jerk, an angle, angular acceleration, an angular jerk, or the like as the command.

ID linking unit 64 links individual ID 43 with the partial time series data when individual ID designation 163 is set, and acquires the virtual individual ID to link the virtual individual ID with the partial time series data when individual ID designation 163 is not set. In step S 1 of Fig. 7, the determination is performed based on individual ID designation 163 of collection setting information 28.

### <L. Program and recording medium>

At least one processor executes the commands of IoT program 260 and web server program 280 of the embodiment, thereby causing the computer to implement the data collection method described above. IoT program 260 and web server program 280 can be provided as a program product by being recorded on a recording medium readable by a machine such as the computer including the recording medium such as a flexible disk, a CD-ROM, a read only memory (ROM), a random access memory (RAM), and a hard disc drive (HDD) that are attached to PLC 100. Recording medium is a medium that accumulates information such as the program by electrical, magnetic, optical, mechanical, or chemical action such that a computer, other devices, a machine, or the like can read the information such as the recorded program. Such the recording medium may include a non-transitory machine-readable storage medium having stored thereon instructions that, when executed by one or more processors, cause the one or more processors to perform the data collection method.

The program(s) can also be provided to PLC 100 by being downloaded from network 2 through network controller 120.

### <M. Appendix>

The above embodiments include the following technical ideas.

### [Configuration 1]

A data collection device (10A) that collects data of a production line (3) through which a target is produced through a plurality of processes (3A, 3B, 3C), the data collection device comprising:
a collection unit (63) configured to collect data of a data item related to production work from each of the plurality of processes;
an acquisition unit configured to acquire an identifier (43, 44) of the target produced in the production line;
a linking unit (64) configured to link the identifier of the target acquired by the acquisition unit with the data collected by the collection unit from the process in a period (T) in which the production work is performed on the target in the process for the each process; and
a generation unit (65) configured to generate visualization data (283) visualizing the data of the each process linked with the identifier by the linking unit.

### [Configuration 2]

The data collection device described in configuration 1, wherein
the collection unit periodically collects the data from the each process, and
in the linking unit, for the each process, the identifier of the target is linked with partial time series data corresponding to the period in time series data periodically collected and configured from the process.

### [Configuration 3]

The data collection device described in configuration 2, wherein
the each process is configured to allow the target to be input one by one to the process,
the production line is configured to allow the target to be input from one process to a next process in predetermined order, and
the visualization data includes, for the each process, characteristic visualization data that visualizes a characteristic of a change in a value of the partial time series data for each target input to the process.

### [Configuration 4]

The data collection device described in configuration 3, wherein the characteristic visualization data includes, for the each process, temporal characteristic visualization data visualizing a characteristic indicating a temporal change in a value of the partial time series data for each target input to the process by visualizing the characteristic with a common time axis.

### [Configuration 5]

The data collection device described in configuration 3 or 4, wherein the characteristic visualization data includes GUI data including an object (54, 55, 54A, 55B) that visualizes the characteristic for each of the target for the each process.

### [Configuration 6]

The data collection device described in configuration 5, wherein the GUI data includes an object (51) that visualizes the identifier of the target linked with the partial time series data of the object on condition that a user operation on the object is received.

### [Configuration 7]

The data collection device described in configuration 5 or 6, wherein for the each process, the object visualizing the characteristic of one of the targets is configured to visualize the characteristic in a manner different from the object visualizing the characteristic of another of the targets.

### [Configuration 8]

The data collection device described in any one of claims 1 to 7, further comprising a UI unit (502) configured to set the data item collected by the collection unit in the data collection device for the each process.

### [Configuration 9]

The data collection device described in configuration 8, wherein the identifier of the target is configured by an identifier in which at least a part of the identifier is common in the plurality of processes.

### [Configuration 10]

The data collection device described in configuration 9, wherein
the production line is configured to produce the target in a lot unit, and
the common identifier includes an identifier (45) of the lot to which the target belongs.

### [Configuration 11]

The data collection device described in configuration 10, wherein
the production line is configured to allow the target to be input to the production line one by one, and
the acquisition unit acquires the identifier of the target from input order of the target input to the production line and the identifier of the lot.

### [Configuration 12]

A control system (100) comprising:
a control device (10B) configured to control the production line; and
the data collection device described in any one of configurations 1 to 11.

### [Configuration 13]

A method for collecting data of a production line through which a target is produced through a plurality of processes, the method comprising:
collecting data of a data item related to production work from each of the plurality of processes;
acquiring an identifier of the target produced in the production line;
linking, for the each process, an identifier of the target acquired in the acquiring with data collected from the process during a period in which the production work is performed on the target in the process; and
generating visualization data visualizing the visualization data of the each process linked with the identifier.

### [Configuration 14]

A program having instructions that, when executed by one or more processors, cause the one or more processors to perform the data collection method according to configuration 13.

## Claims

1. A data collection device (10A) that collects data of a production line (3) through which a target is produced through a plurality of processes (3A, 3B, 3C), the data collection device comprising:
a collection unit (63) configured to collect data of a data item related to production work from each of the plurality of processes;
an acquisition unit configured to acquire an identifier (43, 44) of the target produced in the production line;
a linking unit (64) configured to link the identifier of the target acquired by the acquisition unit with the data collected by the collection unit from the process in a period in which the production work is performed on the target in the process for the each process; and
a generation unit (65) configured to generate visualization data visualizing the data of the each process linked with the identifier by the linking unit.

2. The data collection device according to claim 1, wherein
the collection unit periodically collects the data from the each process, and
in the linking unit, for the each process, the identifier of the target is linked with partial time series data corresponding to the period in time series data periodically collected and configured from the process.

3. The data collection device according to claim 2, wherein
the each process is configured to allow the target to be input one by one to the process,
the production line is configured to allow the target to be input from one process to a next process in predetermined order, and
the visualization data includes, for the each process, characteristic visualization data that visualizes a characteristic of a change in a value of the partial time series data for each target input to the process.

4. The data collection device according to claim 3, wherein the characteristic visualization data includes, for the each process, temporal characteristic visualization data visualizing a characteristic indicating a temporal change in a value of the partial time series data for each target input to the process by visualizing the characteristic with a common time axis.

5. The data collection device according to claim 3 or 4, wherein the characteristic visualization data includes GUI data including an object (54, 55, 54A, 55B) that visualizes the characteristic for each of the target for the each process.

6. The data collection device according to claim 5, wherein the GUI data includes an object (51) that visualizes the identifier of the target linked with the partial time series data of the object on condition that a user operation on the object is received.

7. The data collection device according to claim 5, wherein for the each process, the object visualizing the characteristic of one of the targets is configured to visualize the characteristic in a manner different from the object visualizing the characteristic of another of the targets.

8. The data collection device according to any one of claims 1 to 4, further comprising a UI unit (502) configured to set the data item collected by the collection unit in the data collection device for the each process.

9. The data collection device according to claim 8, wherein the identifier of the target is configured by an identifier in which at least a part of the identifier is common in the plurality of processes.

10. The data collection device according to claim 9, wherein
the production line is configured to produce the target in a lot unit, and
the common identifier includes an identifier (45) of the lot to which the target belongs.

11. The data collection device according to claim 10, wherein
the production line is configured to allow the target to be input to the production line one by one, and
the acquisition unit acquires the identifier of the target from input order of the target input to the production line and the identifier of the lot.

12. A control system (100) comprising:
a control device (10B) configured to control the production line; and
the data collection device according to any one of claims 1 to 11.

13. A method for collecting data of a production line (3) through which a target is produced through a plurality of processes (3A, 3B, 3C), the data collection method comprising:
collecting data of a data item related to production work from each of the plurality of processes;
acquiring an identifier (43, 44) of the target produced in the production line;
linking, for the each process, an identifier of the target acquired in the acquiring with data collected from the process during a period in which the production work is performed on the target in the process; and
generating visualization data (283) visualizing the data of the each process linked with the identifier.

14. A program having instructions that, when executed by one or more processors, causes the one or more processors to perform a data collection method comprising:
collecting data of a data item related to production work from each of the plurality of processes;
acquiring an identifier (43, 44) of the target produced in the production line;
linking, for the each process, an identifier of the target acquired in the acquiring with data collected from the process during a period in which the production work is performed on the target in the process; and
generating visualization data (283) visualizing the data of the each process linked with the identifier.
